# EUROPEAN PATENT APPLICATION

(11) **EP 4 610 761 A1**
(43) Date of publication of application: **03.09.2025**
(21) Application number: 23905804.3
(22) Date of filing: 14.12.2023
(51) Int. Cl.: G05D 1/00

(54) **OBSTACLE TRAVERSAL METHOD AND APPARATUS, AND MOWING ROBOT AND STORAGE MEDIUM**

(30) Priority: 19.12.2022 CN 202211634002
(71) Applicant: Shenzhen Mammotion Innovation Co., Limited, Shenzhen, Guangdong 518000 (CN)
(72) Inventor: WEI, Jidong, Shenzhen, Guangdong 518000 (CN); DU, Pengju, Shenzhen, Guangdong 518000 (CN); WANG, Ning, Shenzhen, Guangdong 518000 (CN); HUA, Jinfeng, Shenzhen, Guangdong 518000 (CN)
(74) Representative: Huang, Liwei
(86) International application number: PCT/CN2023/138843
(87) International publication number: WO 2024/131639

(57) **Abstract**

Disclosed are an obstacle traversal method and apparatus, a robotic lawn mower, and a storage medium. The method includes: determining position information corresponding to at least one obstacle in a current scene; determining a target point corresponding to each of the at least one obstacle based on the position information; and generating a mowing path based on the target point corresponding to each of the at least one obstacle, and controlling the robotic lawn mower to traverse the at least one obstacle based on the mowing path. According to the method, target points corresponding to at least one obstacle in a current scene can be determined, and an optimal mowing path can be generated based on these target points, so as to traverse all obstacles. This can improve the operation efficiency of the robotic lawn mower and reduce power consumption.

## Description

### Technical Field

The present application relates to the technical field of robotic lawn mowers, and in particular, to an obstacle traversal method and apparatus, a robotic lawn mower, and a storage medium.

### Background Art

As people's living standards continuously improve, people have increasingly high requirements for leisure environments. Private gardens, parks, playgrounds, and other places have become the best places for people to relax and entertain. However, lawns in private gardens, parks, playgrounds, and other places need to be trimmed from time to time to ensure aesthetics. Currently, a robotic lawn mower is usually used to replace human labor for trimming.

Currently, there may be many obstacles of different sizes and shapes in an operation area of the robotic lawn mower. In order to achieve high mowing coverage and reduce missed mowing areas, it is necessary to specifically perform mowing along edges of these obstacles. Generally, mowing along edges is sequentially performed in a sequence in which these obstacles are marked. However, the applicant has found that while the method in the prior art allows for mowing along the edges of the obstacles, many unnecessary paths are taken during operation, which not only increases the total mowing time but also consumes more power of the robotic lawn mower.

### Summary

Embodiments of the present disclosure provide an obstacle traversal method and apparatus, a robotic lawn mower, and a storage medium, which makes it possible to select an optimal route for obstacle traversal, thereby improving the operation efficiency of the robotic lawn mower and reducing power consumption.

According to a first aspect, an embodiment of the present disclosure provides an obstacle traversal method, which is performed by a robotic lawn mower, comprising:
determining a position information corresponding to at least one obstacle in a current scene;
determining a respective target point corresponding to each of the at least one obstacle based on the position information; and
generating a mowing path based on the respective target points corresponding to the at least one obstacle, and controlling the robotic lawn mower to traverse the at least one obstacle based on the mowing path.

As an example, the determining a respective target point corresponding to each of the at least one obstacle based on the position information comprises:
determining a contour information corresponding to the at least one obstacle;
converting the contour information of the at least one obstacle into a set of discrete points; and
selecting a target point from a set of discrete points of a current obstacle based on position information corresponding to the current obstacle and adjacent obstacles.

As an example, the determining contour information corresponding to the at least one obstacle includes:
obtaining a initial contour information of the obstacle;
extracting a contour key point from the initial contour information; and
locally optimizing the initial contour information through a curve fitting algorithm based on the contour key point, to obtain optimized target contour information.

As an example, before the converting the contour information of the at least one obstacle into a set of discrete points, the method further includes:
calculating an occupied area of the obstacle based on the contour information of the obstacle;
determining whether the occupied area is greater than an occupied area of the robotic lawn mower;
in respond to the occupied area is greater than the occupied area of the robotic lawn mower, converting the contour information of the obstacle into a set of discrete points; or
in respond to the occupied area is not greater than the occupied area of the robotic lawn mower, determining a target point of the obstacle based on the position information of the obstacle.

As an example, before the converting the contour information of the at least one obstacle into a set of discrete points, the method further includes:
calculating a distance between each two obstacles based on the position information corresponding to the at least one obstacle; and
sequentially determining a closest obstacle from a start position of the robotic lawn mower based on the distance, to obtain a traversal order of the at least one obstacle.

As an example, the generating a mowing path based on the target points respectively corresponding to the at least one obstacle includes:
sequentially connecting the target points respectively corresponding to the at least one obstacle according to the traversal order, to generate the mowing path.

As an example the converting the contour information of the at least one obstacle into a set of discrete points includes:
calculating a first tangential angle range of a preceding adjacent obstacle relative to the current obstacle and a second tangential angle range of a posterior adjacent obstacle of the current obstacle respectively, based on the position information corresponding to the current obstacle and the adjacent obstacles; and
determining an overlapping range of the first tangential angle range and the second tangential angle range, and converting a part of a contour of the current obstacle within the overlapping range into a set of discrete points.

As an example, the converting the contour information of the at least one obstacle into the set of discrete points includes:
expanding a contour of the at least one obstacle outward based on size information of the robotic lawn mower; and
converting a expanded contour of the at least one obstacle into the set of discrete points.

As an example, the selecting a target point from a set of discrete points of a current obstacle based on position information corresponding to the current obstacle and adjacent obstacles comprises:
for each candidate point in the set of discrete point of the current obstacles, calculating an angle value of the candidate point relative to two adjacent obstacles based on the position information; and
selecting a candidate point corresponding to a maximum angle value as a target point of the current obstacle.

As an example, the selecting, a target point from the set of discrete points of the current obstacle, based on position information corresponding to the current obstacle and adjacent obstacles includes:
for each candidate point in the set of discrete points of the current obstacle, calculating a sum of a distance between the candidate point and the preceding adjacent obstacle plus a distance between the candidate point and the posterior adjacent obstacle; and
selecting the candidate point corresponding to a minimum sum of distances as the target point of the current obstacle.

According to a second aspect, an embodiment of the present disclosure provides an obstacle traversal apparatus, which is applied to a robotic lawn mower, including:
a first determining module, configured to determine position information corresponding to at least one obstacle in a current scene;
a second determining module, configured to determine a respective target point corresponding to each of the at least one obstacle based on the position information; and
a generation module, configured to generate a mowing path based on the respective target points corresponding to the at least one obstacle, and control the robotic lawn mower to traverse the at least one obstacle based on the mowing path.

According to a third aspect, an embodiment of the present disclosure provides a robotic lawn mower, which includes a memory, a processor, and a computer program stored in the memory and executable on the processor, where the processor, when executing the program, implements the steps of the obstacle traversal method described above.

According to a fourth aspect, an embodiment of the present disclosure provides a storage medium having stored there on a computer program that, when executed by a processor, causes the steps of the obstacle traversal method described above to be implemented.

According to the obstacle traversal method provided in the embodiments of the present disclosure, the position information corresponding to the at least one obstacle may be determined in the current scene, the respective target point corresponding to each of the at least one obstacle may be determined based on the position information, the mowing path may be generated based on the target points respectively corresponding to the at least one obstacle, and the robotic lawn mower may be controlled to traverse the at least one obstacle based on the mowing path. In the embodiments of the present disclosure, target points corresponding to the at least one obstacle in the current scene may be determined, and an optimal mowing path may be generated based on these target points, so as to traverse all obstacles. This can improve the operation efficiency of the robotic lawn mower and reduce power consumption.

### Brief Description of the Drawings

To describe the technical solutions in the embodiments of the present application more clearly, the following briefly describes the accompanying drawings required for describing the embodiments. Apparently, the accompanying drawings in the following description show merely some embodiments of the present application, and those skilled in the art may derive other drawings from these accompanying drawings without creative efforts.
FIG. 1 is a schematic diagram of a scene of an obstacle traversal method according to an embodiment of the present application;
FIG. 2 is a schematic flowchart of an obstacle traversal method according to an embodiment of the present application;
FIG. 3 is a schematic diagram of obtaining a set of discrete points through conversion according to an embodiment of the present application;
FIG. 4 is a schematic diagram of mowing path planning according to an embodiment of the present application;
FIG. 5 is another schematic flowchart of an obstacle traversal method according to an embodiment of the present application;
FIG. 6 is a schematic diagram of obstacle contour optimization according to an embodiment of the present application;
FIG. 7 is a schematic diagram of obstacle contour extension according to an embodiment of the present application;
FIG. 8 is a schematic diagram of selection of a target point of an obstacle according to an embodiment of the present application;
FIG. 9 is a schematic diagram of a structure of an obstacle traversal apparatus according to an embodiment of the present application;
FIG. 10 is a schematic diagram of another structure of an obstacle traversal apparatus according to an embodiment of the present application; and
FIG. 11 is a schematic diagram of a structure of an electronic device according to an embodiment of the present application.

### Detailed Description of Embodiments

The technical solutions in the embodiments of the present disclosure will be described clearly and completely below with reference to the accompanying drawings in the embodiments of the present disclosure. Apparently, the described embodiments are only some rather than all of the embodiments of the present disclosure. All other embodiments obtained by those skilled in the art based on the embodiments of the present disclosure without creative efforts shall fall within the scope of protection of the present disclosure.

It should be noted that when an element is referred to as being "fastened to" or "arranged at" another element, it may be directly or indirectly on the another element. When an element is referred to as being "connected to" another element, it may be directly or indirectly connected to the another element. In addition, connection may be used for both fastening and circuit connection.

It should be understood that orientations or positional relationships indicated by the terms "length", "width", "upper", "lower", "front", "rear", "left", "right", "vertical", "horizontal", "top", "bottom", "inner", "outer", etc. are orientations or positional relationships shown in the accompanying drawings, and are merely for facilitating the description of the embodiments of the present disclosure and simplifying the description, rather than indicating or implying that a specified apparatus or element must have a specific orientation or be constructed and operated in a specific orientation, and therefore should not be construed as limiting the present disclosure.

In addition, the terms "first" and "second" are merely used for the purpose of illustration, and cannot be construed as indicating or implying relative importance or implicitly indicating the number of technical features indicated. Thus, the features defined with "first" and "second" may explicitly or implicitly include one or more features. In the description of the embodiments of the present disclosure, "a plurality of" means two or more, unless specifically defined otherwise.

An embodiment of the present disclosure provides an obstacle traversal method and apparatus, a robotic lawn mower, and a storage medium.

The obstacle traversal apparatus may be specifically integrated in a microcontroller unit (MCU) of the robotic lawn mower, or may be integrated in an intelligent terminal or a server. The MCU, also referred to as a single-chip microcomputer, is a chip-level computer formed through appropriate reduction of a frequency and specifications of a central processing unit (CPU), and interfacing of peripherals such as a memory, a timer, a USB, an analog-to-digital converter/a digital-to-analog converter, a UART, a PLC, and a DMA, to provide different combined control for different disclosure scenarios. The robotic lawn mower may move automatically, prevent collisions, and automatically return within a range for charging, is provided with safety detection and battery level detection, has a certain climbing ability, and therefore is particularly suitable for lawn trimming and maintenance in places such as home courtyards and public green space. The robotic lawn mower has the characteristics of automatic mowing, grass clipping cleanup, automatic rain avoidance, automatic charging, automatic obstacle avoidance, compact size, electronic virtual fencing, network control, etc.

The terminal may be a smartphone, a tablet computer, a laptop, a desktop computer, a smart speaker, a smart watch, etc., but is not limited thereto. The terminal and the server may be connected directly or indirectly by means of wired or wireless communication. The server may be a separate physical server, a server cluster or distributed system including a plurality of physical servers, or a cloud server that provides cloud services, cloud databases, cloud computing, cloud functions, cloud storage, network services, cloud communication, middleware services, domain name services, security services, CDNs, and basic cloud computing services such as big data and artificial intelligence platforms, which will not be limited in the present disclosure.

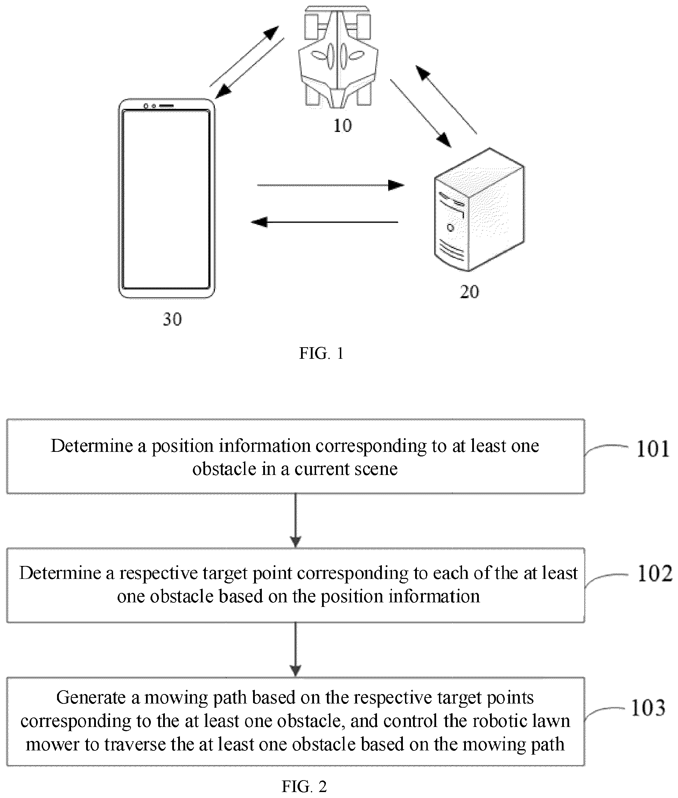

For example, referring to FIG. 1, the present disclosure provides a mowing system, including a robotic lawn mower 10, a server 20, and user device 30, which are in a communication connection with each other. By using the user device 30, a user may control the robotic lawn mower 10 to perform obstacle detection and mowing path planning. Specifically, in this embodiment of the present disclosure, the robotic lawn mower 10 may have a vision sensor integrated therein, and the vision sensor may be used to detect an obstacle. In other embodiments, the robotic lawn mower 10 may also integrate additional sensors. For example, a rain sensor may be arranged on the top of the robotic lawn mower 10 to detect whether it is currently raining, a lateral ultrasonic sensor and an infrared sensor may further be arranged on sides of the robotic lawn mower 10, and collision sensors may be arranged on the periphery of the robotic lawn mower 10, etc., thereby achieving comprehensive detection of an obstacle through a variety of sensors. After the obstacle is detected, the robotic lawn mower 10 may plan a mowing path accordingly.

During an operation, by using the user device 30, the user may further control and adjust a traveling path, a traveling speed, or a mowing range, etc. of the robotic lawn mower 10 in real time. After the operation is completed, data corresponding to this mowing operation may further be synchronized to the server 20, to facilitate viewing by the user.

For example, the robotic lawn mower 10 starts an operation in response to user instructions, where the user instructions may be generated and sent by the user device 30, and during the operation, the robotic lawn mower 10 determines position information of at least one obstacle in a current scene and generates an optimal path to perform mowing along edges of these obstacles sequentially.

The following is a detailed description of the method. It should be noted that the order of description of the following embodiments does not constitute a limitation on the order of precedence for the embodiments.

An obstacle traversal method comprises: determining a position information corresponding to at least one obstacle in a current scene; determining a respective target point corresponding to each of the at least one obstacle based on the position information; and generating a mowing path based on the respective target points corresponding to the at least one obstacle, and controlling the robotic lawn mower to traverse the at least one obstacle based on the mowing path.

Referring to FIG. 2, FIG. 2 is a schematic flowchart of an obstacle traversal method according to an embodiment of the present disclosure. A specific process of the obstacle traversal method may be as follows.

101: Determine a position information corresponding to at least one obstacle in a current scene.

As an example, the position information corresponding to the at least one obstacle may be pre-stored in a storage unit of a robotic lawn mower. For example, if the robotic lawn mower has performed an obstacle traversal process in a current area, then after the process, both a traveling route of the robotic lawn mower and position information of an obstacle may be stored in a map for subsequent direct use.

As an example, if it is the first time that the robotic lawn mower performs obstacle traversal in a current area, the robotic lawn mower may perform obstacle detection in an operation area with a boundary delineated in advance, and then confirm position information of each obstacle based on a detection result and generate a mowing path, so as to traverse all of the at least one obstacle detected and complete mowing along edges.

Specifically, the robotic lawn mower may detect the position information of the obstacle in the current scene. The position information of the obstacle may be detected by a vision sensor integrated on the robotic lawn mower. For example, the current scene is photographed by using a plurality of cameras to obtain at least one scene image, and then a position of the obstacle is determined through image analysis. In other embodiments, the robotic lawn mower may further have other types of sensors integrated thereon, such as a collision sensor, a depth sensor, an ultrasonic sensor, and an infrared sensor, so as to detect the position of the at least one obstacle. In addition, after detection results of the above sensors are obtained, the position information of the detected obstacle may be calculated by a positioning system in combination with the detection results.

For example, after the vision sensor arranged on the robotic lawn mower is turned on, it may acquire an initial image in real time or at a fixed operating frequency with a preset time interval, so as to continuously obtain at least one initial image for the current scene.

In an embodiment, the position of the obstacle may be represented by a center point of a contour of the obstacle. For example, a space rectangular coordinate system may be established based on the initial image, a pixel position of the center point in the image is x and y values of the obstacle in a camera coordinate system, and a z value of the obstacle in the camera coordinate system may be represented by a depth value. Specifically, a disparity value corresponding to the point may be converted to the depth value as the z value. The x value, y value, and z value respectively represent an x coordinate, a y coordinate, and a z coordinate in the space rectangular coordinate system. The depth value of the center point may be calculated based on disparity information of a binocular image. Specifically, the depth value may be obtained by dividing a product of a focal length and a baseline by a disparity, where the focal length is a focal length used by a binocular camera to capture an initial image, namely a distance from an optical center of a lens to an imaging plane such as a film, a CCD, or a CMOS, and the baseline is a distance between optical centers of two cameras of the binocular camera.

In an embodiment, the at least one obstacle in the above scene may be a physical obstacle detected by the robotic lawn mower, or may be a virtual obstacle that is preset by a user. For example, the user may set a virtual restricted area in the current scene, to prevent the robotic lawn mower from entering. A shape, size, and position of the virtual obstacle may further be manually set by the user. For example, the virtual obstacle is circular, rectangular, etc.

102: Determine a respective target point corresponding to each of the at least one obstacle based on the position information.

In an embodiment, when a respective target point corresponding to each obstacle is determined, a contour of the obstacle may be first converted into a set of discrete points, and the target point is selected from the set. For a process of obtaining contour information of the obstacle, refer to the corresponding description of detection of obstacle position information described above, which will not be further described in this embodiment. That is, the step of determining a respective target point corresponding to each of the at least one obstacle based on the position information may comprise: determining contour information corresponding to the at least one obstacle; converting the contour information of the at least one obstacle into a set of discrete points; and selecting a target point from a set of discrete points of a current obstacle based on position information corresponding to the current obstacle and adjacent obstacles.

In an embodiment, when the contour of each obstacle is converted into the set of discrete points, specifically, a distance L between two adjacent discrete points after discretization may be first set to, for example, 0.2 meters, and then discrete points may be sequentially set every 0.2 meters based on the contour of the obstacle. A total of C/L discrete points can be obtained, where C is a perimeter of the contour of the obstacle. It should be noted that the contour of the obstacle is a plane contour of a part of the obstacle in contact with the ground, rather than a three-dimensional contour.

Furthermore, the distance between two adjacent discrete points may be set based on the perimeter of the contour of the obstacle, and may be specifically positively correlated with the perimeter of the contour of the obstacle. For example, a fixed number of discrete points may be set, and then a distance between the discrete points is calculated based on the perimeter of the contour of the obstacle. That is, a larger perimeter of the contour of the obstacle indicates a larger obstacle, and thus a relatively large spacing between adjacent discrete points may be set. On the contrary, a smaller perimeter of the contour of the obstacle indicates a smaller obstacle, and thus a relatively small distance between adjacent discrete points may be set.

In an embodiment, considering that the number of discrete points after conversion may differ for different obstacles, a smaller obstacle may be directly considered as a single point, and only for a large obstacle, it is necessary to further convert its contour information into a set of discrete points. Therefore, in this embodiment, a size or occupied area of the robotic lawn mower may be used as a basis for determining whether it is necessary to convert a contour of an obstacle into a set of discrete points. That is, before converting the contour information of the at least one obstacle into a set of discrete points, the method may further comprises: calculating an occupied area of the obstacle based on the contour information of the obstacle; determining whether the occupied area of the obstacle is greater than an occupied area of the robotic lawn mower; if the occupied area of the obstacle is greater than the occupied area of the robotic lawn mower, converting the contour information of the obstacle into a set of discrete points; or if the occupied area of the obstacle is not greater than the occupied area of the robotic lawn mower, determining a target point of the obstacle based on the position information of the obstacle.

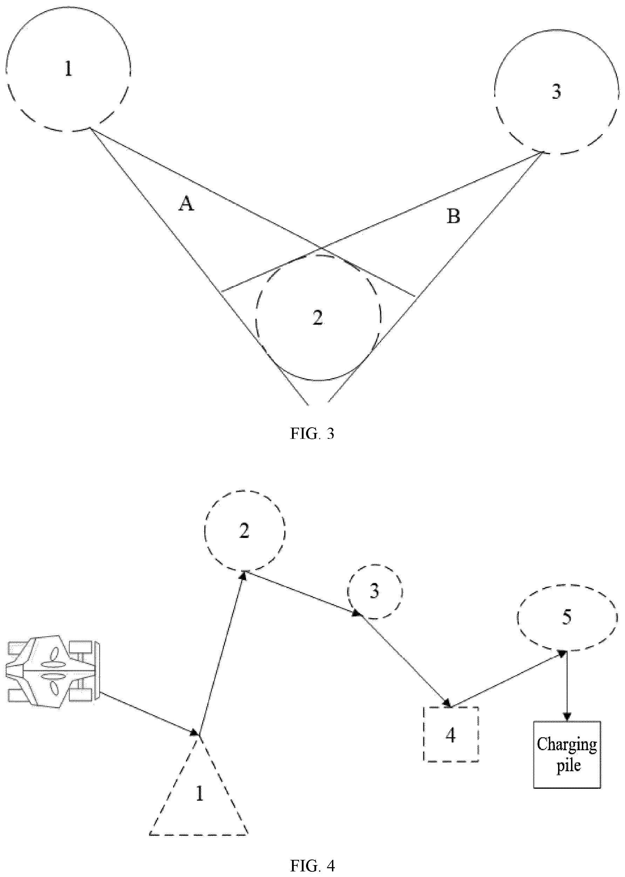

In an embodiment, after the contour of the obstacle is converted into a set of discrete points, it is necessary to further select a target point from the set of discrete points. Therefore, in order to further improve efficiency in subsequent target point selection and path planning, only a part of the contour of the obstacle may be converted into a set of discrete points in the present disclosure. Specifically, when the robotic lawn mower cannot pass through an obstacle, namely an area enclosed by several discrete points of the obstacle, during a process of traveling along a connection line between two obstacles, only for a part that is of a contour of a current obstacle and is located both within a tangent range of a preceding adjacent obstacle relative to the current obstacle and within a tangent range of a posterior adjacent obstacle relative to the current obstacle, mowing along edges may be performed by the robotic lawn mower. As shown in FIG. 3, when a tangential angle range of a current obstacle 2 relative to a preceding adjacent obstacle 1 is A, and a tangential angle range of the current obstacle 2 relative to a posterior adjacent obstacle 3 is B, only a part that is of a contour of the current obstacle 2 and is located both within the tangential angle range A and within the tangential angle range B should be converted into a set of discrete points. That is, the step of converting the contour information of the at least one obstacle into a set of discrete points may comprises: calculating a first tangential angle range of a preceding adjacent obstacle relative to the current obstacle and a second tangential angle of a posterior adjacent obstacle relative to the current obstacle, respectively, based on the position information corresponding to the current obstacle, the preceding adjacent obstacle, and the posterior adjacent obstacle; and determining an overlapping range of the first tangential angle range and the second tangential angle range, and converting a part that is of a contour of the current obstacle and that is within the overlapping range into a set of discrete points.

It should be noted that if the current obstacle is the first detected obstacle, a preceding adjacent obstacle thereto may be replaced by a start point of the robotic lawn mower; or, if the current obstacle is the last detected obstacle, the posterior adjacent obstacle thereto may be replaced by an end point of the robotic lawn mower, for example, a charging pile for the robotic lawn mower.

In an embodiment, a target point may be selected from a set of discrete points of a current obstacle according to a minimum distance principle. For example, a sum of distances between each discrete point in the set of discrete points and two adjacent obstacles may be calculated, and a discrete point that minimizes the sum of distances may be used as the target point of the current obstacle. When the target point of the current obstacle is determined, a target point of its preceding adjacent obstacle has been confirmed, while a target point of its posterior adjacent obstacle has not been confirmed yet. Therefore, a position of a center point of the posterior adjacent obstacle may be used as a basis for calculation. That is, the step of "selecting a target point from a set of discrete points of a current obstacle, based on position information corresponding to the current obstacle, the preceding adjacent obstacle and the posterior adjacent obstacle" may include: for each candidate point in the set of discrete points of the current obstacle, calculating, based on the position information, a sum of the distance between the candidate point and the preceding adjacent obstacle plus the distance between the candidate point and the posterior adjacent obstacle; and selecting a candidate point corresponding to a minimum sum of distances as the target point of the current obstacle.

In an embodiment, a target point may be selected from a set of discrete points of a current obstacle according to both a minimum distance principle and a maximum angle principle. For example, the positional information of all obstacles may first be used to determine two adjacent obstacles for each obstacle. Specifically, all combinations of any other two obstacles as two adjacent obstacles of the current obstacle may be exhaustively enumerated for the current obstacle, and then two optimal adjacent obstacles may be determined according to a principle of minimizing a sum of distances between the current obstacle and two adjacent obstacles. After that, a point that maximizes an angle formed by line segments connecting the point and the two adjacent obstacles may be searched for among all discrete points of the current obstacle, and the point may be used as the target point of the current obstacle.

In an embodiment, a target point may be selected from a set of discrete points of an obstacle by using an exhaustive enumeration method, a random selection method in case of a limited number of iterations, or a genetic algorithm, which will not be further limited in this embodiment.

103: Generate a mowing path based on the respective target points corresponding to the at least one obstacle, and control the robotic lawn mower to traverse the at least one obstacle based on the mowing path.

In an embodiment, after a target point of each obstacle is determined, the mowing path may be generated by sequentially connecting the plurality of target points based on the mowing robot's starting position and ending position , and the robotic lawn mower may be controlled to traverse at least one obstacle based on the mowing path. For example, the MCU in the robotic lawn mower may generate the mowing path based on the respective target point of the at least one obstacle and then control, based on the mowing path, the robotic lawn mower to perform an operation of mowing along edges. For another example, the server or the user device may control, based on the mowing path, the robotic lawn mower to travel to perform a mowing operation.

In an embodiment, since the robotic lawn mower needs to traverse a plurality of obstacles and perform mowing along edges-following during an entire process, the problem may also be considered as a traveling salesman problem (TSP), and then a solution to the problem may be obtained through algorithms such as a simulated annealing algorithm, a genetic algorithm, or a particle swarm algorithm, to obtain an optimal sequence. Specifically, an optimal sequence corresponding to using each of different discrete points of each obstacle as a target point may be calculated, and different optimal sequences may be obtained when different target points are selected from a set of discrete points. In this case, a sequence that minimizes a total distance of a final mowing path may be selected from the optimal sequences. In addition, a target point that is selected from the set of discrete points of each obstacle corresponding to the sequence may be determined, and an optimal mowing path for mowing along edges may be obtained.

It should be noted that when the mowing path is generated based on the respective target points corresponding to the at least one obstacle, the start position and the end position of the robotic lawn mower need to be considered. For example, as shown in FIG. 4, a start position, target points of an obstacle 1, an obstacle 2, an obstacle 3, an obstacle 4, and an obstacle 5, and a charging pile for the robotic lawn mower are sequentially connected, to complete an operation of mowing along edges of a plurality of obstacles.

It can be learned from the above description that according to the obstacle traversal method provided in the embodiments of the present disclosure, the position information corresponding to the at least one obstacle may be determined in the current scene, the respective target point corresponding to each of the at least one obstacle may be determined based on the position information, the mowing path may be generated based on the respective target points corresponding to the at least one obstacle, and the robotic lawn mower may be controlled to traverse the at least one obstacle based on the mowing path. In the embodiments of the present disclosure, the respective target points corresponding to the at least one obstacle in the current scene may be determined, and an optimal mowing path may be generated based on these target points, so as to traverse all obstacles. This can improve the operation efficiency of the robotic lawn mower and reduce power consumption.

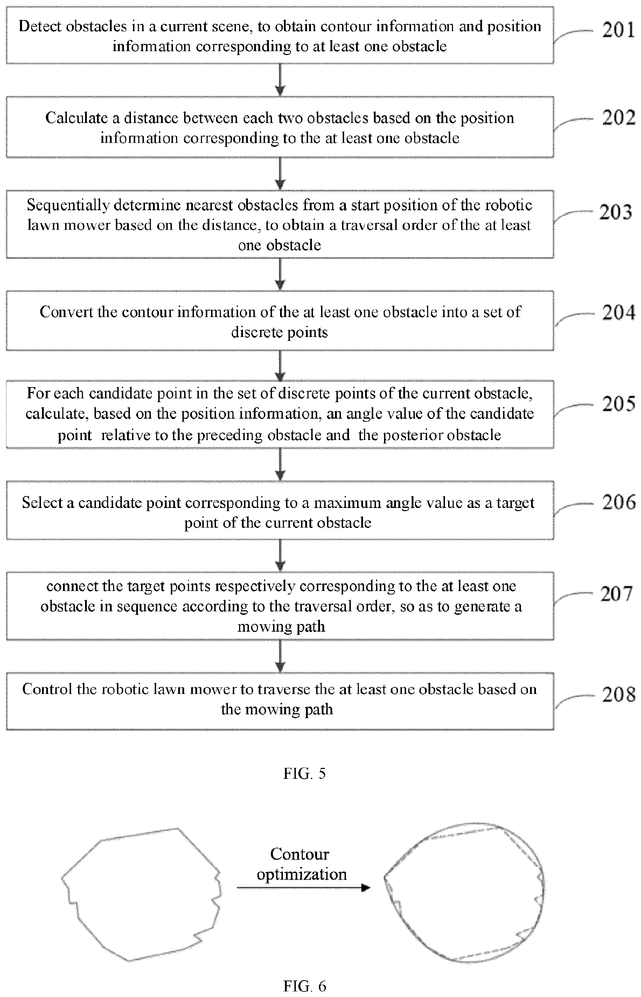

Referring to FIG. 5, FIG. 5 is another schematic flowchart of an obstacle traversal method according to an embodiment of the present disclosure. A specific process of the obstacle traversal method may be as follows.

201: Detect obstacles in a current scene to obtain contour information and position information corresponding to at least one obstacle.

In an embodiment, the contour information of the obstacles may be detected by a vision sensor integrated in a robotic lawn mower. For example, the current scene is photographed by using a plurality of cameras to obtain at least one scene image, and then a contour of the obstacle is determined through image analysis. A position of the obstacle may be represented by a center point of the contour of the obstacle.

In an embodiment, considering that it is difficult for the robotic lawn mower to perform edges-following mowing around obstacles with irregular edges, where the obstacles with irregular edges may include an obstacle with a vertical distance of obstacle edge undulation not exceeding 10 cm, an actual outer diameter of the obstacle may be optimized to a smooth curve shape. Specifically, initial contour information of the obstacle may be obtained, a contour key point in the initial contour information may be extracted, and the initial contour information may be optimized through a curve fitting algorithm based on the contour key point, to obtain target contour information after optimization. As shown in FIG. 6, a plurality of jagged convex points in the obstacle may be optimized to obtain a smooth curve, where the contour key point may be a vertex of the contour of the obstacle or a position point with an angle less than a preset value in the contour.

202: Calculate a distance between each two obstacles based on the position information corresponding to the at least one obstacle.

203: Sequentially determine nearest obstacles from a start position of the robotic lawn mower based on the distance, to obtain a traversal order of the at least one obstacle.

In this embodiment of the present disclosure, the traversal order of the at least one obstacle may be pre-determined, and then a final mowing path may be generated based on the sequence. Specifically, a radius of the obstacle may be ignored first, and all obstacles in the current scene may be considered as a point by default. Then, a spacing between each two obstacles is calculated based on current position information of the obstacles, and nearest obstacles are sequentially searched for from the start position to an end position (such as a charging pile or a boundary of the current scene) of the robotic lawn mower. In this way, a traversal order of the at least one obstacle is quickly obtained according to a minimum distance principle.

In an embodiment, when the traversal order of the at least one obstacle is determined, all routes that allow all obstacles to be traversed once starting from the start position of the robotic lawn mower may further be enumerated in an exhaustively enumerating manner, a total distance of each of the routes is then calculated, and a route with a shortest total distance is used as a final traversal route of the robotic lawn mower. In addition, a traversal order of at least one obstacle in the route is determined.

204: Convert the contour information of the at least one obstacle into a set of discrete points.

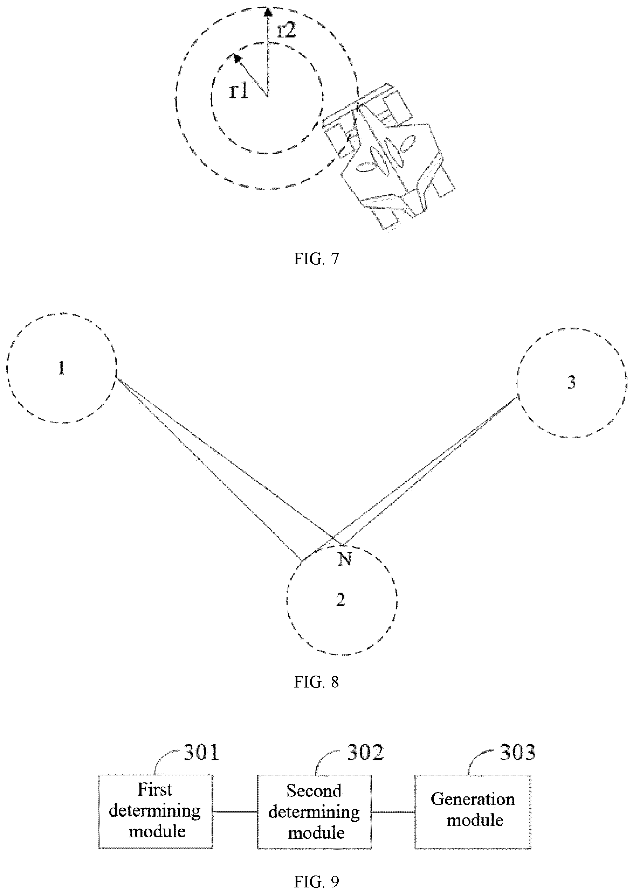

In an embodiment, considering that the robotic lawn mower and the obstacle each have a collision volume, the contour of the obstacle may be extended outward by a certain amount, for example, half a radius of the robotic lawn mower, based on the actual outer diameter of the obstacle, so that when reaching this point, the robotic lawn mower is exactly tangent to the outer diameter of the obstacle, avoiding failure to reach a point on the contour of the obstacle, as shown in FIG. 7. That is, the step of converting the contour information of the at least one obstacle into a set of discrete points may include: extending a contour of the at least one obstacle outward based on size information of the robotic lawn mower, and converting a contour obtained after extension of the at least one obstacle into a set of discrete points.

In an embodiment, a contour of each obstacle may be converted into a set of discrete points. Specifically, a distance between two adjacent discrete points after discretization may be first set, and then discrete points may be sequentially set based on the distance, It should be noted that the contour of the obstacle is a plane contour of a projection of the obstacle on the ground.

205: For each candidate point in the set of discrete points of the current obstacle, Calculate, based on the position information, an angle value of the candidate point relative to the preceding obstacle and the posterior obstacle.

206: Select a candidate point corresponding to a maximum angle value as a target point of the current obstacle.

If the robotic lawn mower enters at an angle perpendicular to a tangent of an obstacle, it needs to adjust itself to an angle of the tangent when moving toward a next obstacle, which requires in-place turning for operating along edges, and consequently causes damage to a lawn. To avoid this situation, in this embodiment, a target point may be selected from the set of discrete points of the current obstacle according to a principle of maximizing an angle between connection lines. At a maximum angle, it is beneficial for the robotic lawn mower approaching the obstacle along the edge without requiring a large-angle adjustment, thereby reducing the damage to the lawn during turning of the robotic lawn mower. For example, referring to FIG. 8, an obstacle 1 is a preceding obstacle of a current obstacle 2, and an obstacle 3 is a posterior obstacle of the current obstacle 2. When a target point is selected from the set of discrete points of the current obstacle, an included angle between lines connecting each discrete point to the obstacle 1 and the obstacle 3 may be calculated, and then a discrete point N corresponding to a maximum included angle is selected and used as a target point of the current obstacle 2. It should be noted that when the target point of the current obstacle 2 is determined, a target point of its preceding adjacent obstacle 1 has been confirmed, while a target point of its posterior adjacent obstacle 3 has not been confirmed yet. Therefore, in an embodiment, a position of a center point of the posterior obstacle 3 may be used as a basis for calculation.

In another embodiment, a target point may be selected from a set of discrete points according to a minimum distance principle. For example, a sum of distances between each discrete point in the set of discrete points and preceding and posterior obstacles may be calculated, and a discrete point that minimizes the sum of distances may be used as the target point of the current obstacle.

It should be noted that if the current obstacle is the first detected obstacle, a preceding obstacle adjacent thereto may be substituted with a start point of the robotic lawn mower; or, if the current obstacle is the last detected obstacle, the posterior obstacle adjacent thereto may be substituted with an end point of the robotic lawn mower, for example, a charging pile for the robotic lawn mower or a boundary of the current scene, which will not be further described in the present disclosure.

207: connect the target points respectively corresponding to the at least one obstacle in sequence according to the traversal order, so as to generate a mowing path.

208: Control the robotic lawn mower to traverse the at least one obstacle based on the mowing path.

Since the traversal order of the at least one obstacle has been determined in the above step, in this embodiment, the target points corresponding to each obstacle can be directly and sequentially connected in the traversal order, to obtain a mowing path that allows all obstacles to be traversed once and complete edge-following mowing.

In an embodiment, the robotic lawn mower performs an operation based on the optimal mowing path. If the robotic lawn mower encounters an additional obstacle during traveling, the robotic lawn mower may record the obstacle as a temporary obstacle, obtain contour information and position information of the temporary obstacle, and bypass the temporary obstacle and continue the operation based on the mowing path. If the robotic lawn mower detects that the temporary obstacle still exists at the same position when mowing again, the robotic lawn mower may record the temporary obstacle in a map and update it as a fixed obstacle, and then regenerate a mowing path for mowing along edges in the current scene based on the contour information and position information of the obstacle.

It can be learned from the above description that, according to the obstacle traversal method provided in the embodiments of the present disclosure, the obstacle in the current scene may be detected to obtain the contour information and the position information corresponding to the at least one obstacle; the distance between each two obstacles may be calculated based on the position information corresponding to the at least one obstacle; the nearest obstacles may be sequentially determined from the start position of the robotic lawn mower based on the distance, to obtain the traversal order of the at least one obstacle; the contour information of the at least one obstacle may be converted into the set of discrete points; the angle values of each candidate point in the set of discrete points of the current obstacle relative to the preceding and posterior obstacles may be calculated based on the position information; the candidate point corresponding to the maximum angle value may be selected as the target point of the current obstacle; the target points respectively corresponding to the at least one obstacle may be sequentially connected in the traversal order, to generate the mowing path; and the robotic lawn mower may be controlled to traverse the at least one obstacle based on the mowing path. In the embodiments of the present disclosure, the contour information of the obstacle may be converted into the set of discrete points, and the target point may be selected from the set to generate the optimal mowing path, so as to traverse all obstacles. This can improve the operation efficiency of the robotic lawn mower and reduce power consumption.

In order to facilitate better implementation of the obstacle traversal method provided in the embodiments of the present disclosure, an embodiment of the present disclosure further provides an obstacle traversal apparatus on the basis of the above description. The meanings of the terms are the same as those in the obstacle traversal method described above. For specific implementation details, refer to the description in the method embodiments.

Referring to FIG. 9, FIG. 9 is a schematic diagram of a structure of an obstacle traversal apparatus according to an embodiment of the present disclosure. The obstacle traversal apparatus may include:
a first determining module 301 configured to determine position information corresponding to at least one obstacle in a current scene;
a second determining module 302 configured to determine a respective target point corresponding to each of the at least one obstacle based on the position information; and
a generation module 303 configured to generate a mowing path based on the respective target points corresponding to the at least one obstacle, and control the robotic lawn mower to traverse the at least one obstacle based on the mowing path.

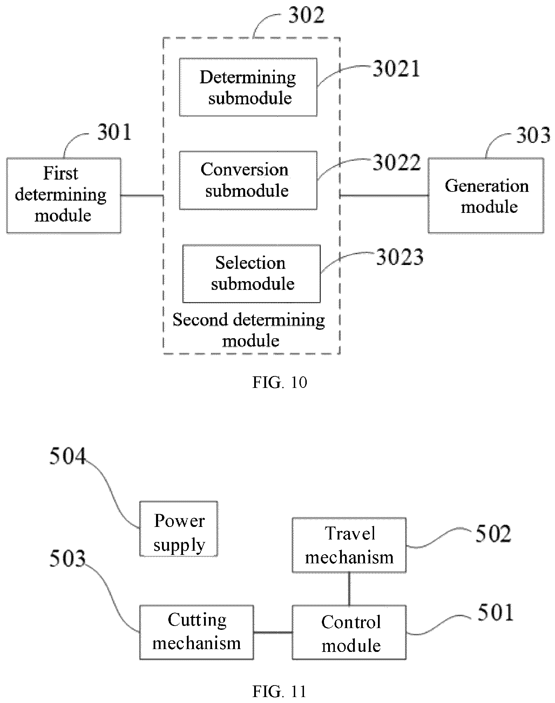

In an embodiment, referring to FIG. 10, the second determining module 302 may specifically include:
a determining submodule 3021 configured to determine contour information corresponding to the at least one obstacle;
a conversion submodule 3022 configured to convert the contour information of the at least one obstacle into a set of discrete points; and
a selection submodule 3023 configured to select a target point from a set of discrete points of a current obstacle based on position information corresponding to the current obstacle and adjacent obstacles.

In an embodiment, the selection submodule 3023 is further configured to: calculate, based on the position information, angle values of each candidate point in the set of discrete points of the current obstacle relative to two adjacent obstacles; and select a candidate point corresponding to a maximum angle value as a target point of the current obstacle.

It can be learned from the above description that in the embodiments of the present disclosure, the first determining module 301 determines the position information corresponding to the at least one obstacle in the current scene, the second determining module 302 determines the target point corresponding to each of the at least one obstacle based on the position information, and the generation module 303 generates the mowing path based on the target points respectively corresponding to the at least one obstacle, and controls the robotic lawn mower to traverse the at least one obstacle based on the mowing path. In the embodiments of the present disclosure, target points corresponding to the at least one obstacle in the current scene may be determined separately, and an optimal mowing path may be generated based on these target points, so as to traverse all obstacles. This can improve the operation efficiency of the robotic lawn mower and reduce power consumption.

In addition, an embodiment of the present disclosure further provides a robotic lawn mower, as shown in FIG. 11. FIG. 11 is a schematic diagram of a structure of a robotic lawn mower according to an embodiment of the present disclosure. Specifically,
the robotic lawn mower may include components such as a control module 501, a travel mechanism 502, a cutting module 503, and a power supply 504. Those skilled in the art may understand that the structure of the electronic device shown in FIG. 11 does not impose a limitation on the electronic device, and may include more or fewer components than those shown, a combination of some components, or a different arrangement of components.

The control module 501 is a control center of the robotic lawn mower. The control module 501 may specifically include components such as a central processing unit (CPU), a memory, an input/output port, a system bus, a timer/counter, a digital-to-analog converter, and an analog-to-digital converter. The CPU performs various functions of the robotic lawn mower and processes data by running or executing software programs and/or modules stored in the memory and invoking the data stored in the memory. Preferably, the CPU can integrate an disclosure processor and a modem processor, where the disclosure processor mainly processes operating systems and applications, etc., and the modem processor mainly processes wireless communication. It may be understood that the above mentioned modem processor may not be integrated into the CPU.

The memory may be used to store software programs and modules, and the CPU executes various functional applications and processes data by running the software programs and modules stored in the memory. The memory may mainly include a program storage area and a data storage area, where the program storage area can store an operating system, an application required by at least one function (such as a sound play function and an image play function), etc., and the data storage area can store data created during the use of the electronic device, etc. In addition, the memory may include a high-speed random access memory, and may also include a non-volatile memory, such as at least one disk storage device and a flash memory device, or other volatile solid-state storage devices. Accordingly, the memory may further include a memory controller to provide an access by the CPU to the memory.

The travel mechanism 502 is electrically connected to the control module 501 for adjusting a travel speed and direction of the robotic lawn mower in response to control signals transmitted by the control module 501, to implement a self-moving function of the robotic lawn mower.

The cutting module 503 is electrically connected to the control module 501 and is configured to adjust a height and rotation speed of a cutter disc in response to the control signals transmitted by the control module, to implement a mowing operation.

The power supply 504 may be logically connected to the control module 501 by means of a power management system, so as to implement functions such as charging management, discharging management, and power consumption management by means of the power management system. The power supply 504 may further include any of one or more DC or AC power supplies, a recharging system, a power failure detection circuit, a power converter or an inverter, a power status indicator, etc.

Although not shown, the robotic lawn mower may further include a communication module, a sensor module, a prompt module, etc., which will not be repeated herein.

The communication module is configured to transmit and receive signals during transmitting and receiving information, and enable signal transmitting and receiving between user equipment and a base station or a server by establishing a communication connection with the user equipment, the base station, or the server.

The sensor module is configured to collect internal or external environmental information, and feed the collected environmental data back to the control module for making a decision, thereby achieving the functions of precise positioning and intelligent obstacle avoidance of the robotic lawn mower. Optionally, sensors may include: an ultrasonic sensor, an infrared sensor, a collision sensor, a rain sensor, a lidar sensor, an inertial measurement unit, a tachometer, an image sensor, a position sensor and other sensors, which are not limited.

The prompt module is configured to indicate a current operating status of the robotic lawn mower to a user. In this solution, the prompt module includes, but is not limited to, an indicator light, a buzzer, and the like. For example, the robotic lawn mower can indicate to the user a current power status, an operating status of an electric motor, an operating status of the sensor, etc. by means of the indicator light. For another example, if a malfunction or theft of the robotic lawn mower is detected, an alert can be provided by the buzzer.

Specifically, in this embodiment, the processor in the control module 501 may load executable files corresponding to the processes of one or more applications into the memory according to the following instructions, and the processor runs the applications stored in the memory, to implement various functions as follows:
determining position information corresponding to at least one obstacle in a current scene;
determining a respective target point corresponding to each of the at least one obstacle based on the position information; and
generating a mowing path based on the respective target points corresponding to the at least one obstacle, and controlling the robotic lawn mower to traverse the at least one obstacle based on the mowing path.

For the specific implementation of the above operations, refer to the above embodiments, which will not be repeated herein.

According to the robotic lawn mower provided in the embodiments of the present disclosure, the position information corresponding to the at least one obstacle may be determined in the current scene, the target point corresponding to each of the at least one obstacle may be determined based on the position information, the mowing path may be generated based on the target points respectively corresponding to the at least one obstacle, and the robotic lawn mower may be controlled to traverse the at least one obstacle based on the mowing path. In the embodiments of the present disclosure, target points corresponding to the at least one obstacle in the current scene may be determined separately, and an optimal mowing path may be generated based on these target points, so as to traverse all obstacles. This can improve the operation efficiency of the robotic lawn mower and reduce power consumption.

Those of ordinary skill in the art may understand that all or some of the steps of the methods in the above embodiments may be implemented by the instructions, or be completed by controlling related hardware by means of the instructions, where the instructions may be stored in a computer-readable storage medium and loaded and executed by the processor.

Therefore, an embodiment of the present disclosure provides a storage medium storing a plurality of instructions which can be loaded by a processor to perform the steps of any of the obstacle traversal methods provided in the embodiments of the present disclosure. For example, the instructions may cause the following steps to be performed:
determining position information corresponding to at least one obstacle in a current scene;
determining a target point corresponding to each of the at least one obstacle based on the position information; and
generating a mowing path based on the target points respectively corresponding to the at least one obstacle, and controlling the robotic lawn mower to traverse the at least one obstacle based on the mowing path.

For the specific implementation of the above operations, refer to the above embodiments, which will not be repeated herein.

The storage medium may include: a read-only memory (ROM), a random access memory (RAM), a magnetic disk or an optical disc, and the like.

Due to the instructions stored in the storage medium, the steps of any of the obstacle traversal methods provided in the embodiments of the present disclosure may be performed, and the beneficial effects that can be achieved by any of the obstacle traversal methods provided in the embodiments of the present disclosure can thus be achieved. For details, refer to the foregoing embodiments, which will not be repeated herein.

The obstacle traversal method and apparatus, the robotic lawn mower, and the storage medium provided in the embodiments of the present disclosure are described in detail above. The principles and implementations of the present disclosure are set forth through specific examples herein. The descriptions of the foregoing embodiments are merely intended to facilitate understanding of the method and core ideas of the present disclosure. In addition, those skilled in the art can make variations and modifications to the present disclosure in terms of the specific implementations and disclosure scopes according to the ideas of the present disclosure. Therefore, the content of the specification shall not be construed as a limit to the present disclosure.

## Claims

1. An obstacle traversal method, performed by a robotic lawn mower, comprising:
determining position information corresponding to at least one obstacle in a current scene;
determining a respective target point corresponding to each of the at least one obstacle based on the position information; and
generating a mowing path based on the respective target points corresponding to the at least one obstacle, and controlling the robotic lawn mower to traverse the at least one obstacle based on the mowing path.

2. The method according to claim 1, wherein the determining the respective target point corresponding to each of the at least one obstacle based on the position information comprises:
determining contour information corresponding to the at least one obstacle;
converting the contour information of the at least one obstacle into a set of discrete points; and
selecting a target point from a set of discrete points of a current obstacle, based on position information corresponding to the current obstacle and adjacent obstacles.

3. The method according to claim 2, wherein the determining contour information corresponding to the at least one obstacle comprises:
obtaining initial contour information of the obstacle;
extracting contour key points in the initial contour information; and
performing locally optimization on the initial contour information based on the contour key points using a curve fitting algorithm, to obtain optimized target contour information.

4. The method according to claim 2, wherein before the converting the contour information of the at least one obstacle into the set of discrete points, the method further comprises:
calculating an occupied area of the obstacle based on the contour information of the obstacle;
determining whether the occupied area is greater than an occupied area of the robotic lawn mower;
in response to the occupied area is greater than the occupied area of the robotic lawn mower, converting the contour information of the obstacle into a set of discrete points; or
in response to the occupied area is not greater than the occupied area of the robotic lawn mower, determining the target point of the obstacle based on the position information of the obstacle.

5. The method according to claim 2, wherein before the converting the contour information of the at least one obstacle into the set of discrete points, the method further comprises:
calculating a distance between each two obstacles based on the position information corresponding to the at least one obstacle; and
sequentially determining a closest obstacle from a start position of the robotic lawn mower based on the distance, to obtain a traversal order of the at least one obstacle.

6. The method according to claim 5, wherein the generating the mowing path based on the respective target points corresponding to the at least one obstacle comprises:
sequentially connecting the respective target points corresponding to the at least one obstacle according to the traversal order, to generate the mowing path.

7. The method according to claim 2, wherein the converting the contour information of the at least one obstacle into the set of discrete points comprises:
calculating a first tangential angle range of a preceding adjacent obstacle relative to the current obstacle and a second tangential angle range of a posterior adjacent obstacle relative to the current obstacle , based on the position information corresponding to the current obstacle ,the preceding adjacent obstacle, and the posterior adjacent obstacle; and
determining a overlapping range of the first tangential angle range and the second tangential angle range, and converting a part of a contour of the current obstacle within the overlapping range into a set of discrete points.

8. The method according to claim 2, wherein the converting the contour information of the at least one obstacle into the set of discrete points comprises:
expanding a contour of the at least one obstacle outward based on size information of the robotic lawn mower; and
converting a expanded contour of the at least one obstacle into the set of discrete points.

9. The method according to claim 2, wherein the selecting the target point from the set of discrete points of the current obstacle based on position information corresponding to the current obstacle and the adjacent obstacles comprises:
for each candidate point in the set of discrete points of the current obstacle, calculating an angle value of the candidate point relative to two adjacent obstacles based on the position information; and
selecting a candidate point corresponding to a maximum angle value as the target point of the current obstacle.

10. The method according to claim 2, wherein the selecting the target point from the set of discrete points of the current obstacle based on position information corresponding to the current obstacle and adjacent obstacles comprises:
for each candidate point in the set of discrete points of the current obstacle, calculating a sum of a distance between the candidate point and the preceding adjacent obstacle plus a distance between the candidate point and the posterior adjacent obstacle; and
selecting a candidate point corresponding to a minimum sum of distances as the target point of the current obstacle.

11. An obstacle traversal apparatus, which is performed by a robotic lawn mower, comprising:
a first determining module configured to determine position information corresponding to at least one obstacle in a current scene;
a second determining module configured to determine a respective target point corresponding to each of the at least one obstacle based on the position information; and
a generation module configured to generate a mowing path based on the respective target points corresponding to the at least one obstacle, and control the robotic lawn mower to traverse the at least one obstacle based on the mowing path.

12. A robotic lawn mower, comprising: a memory, at least one processor, and a computer program stored in the memory and executable on the at least one processor, wherein the at least one processor, when executing the program, implements the steps of the obstacle traversal method according to any one of claims 1 to 10 to be implemented

13. A storage medium, having stored thereon a computer program that, when executed by a processor, causes the steps of the obstacle traversal method according to any one of claims 1 to 10 to be implemented.
